Europäisches Patentamt

European Patent Office

Office européen des brevets

(11) Veröffentlichungsnummer: **0 163 764**
A2

# (12) EUROPÄISCHE PATENTANMELDUNG

(21) Anmeldenummer: 84112733.5

(22) Anmeldetag: 23.10.84

(51) Int. Cl.⁴: **F 24 H 1/28,** F 24 H 9/18, F 24 H 9/20

(30) Priorität: 04.06.84 DE 3420733

(43) Veröffentlichungstag der Anmeldung: 11.12.85 Patentblatt 85/50

(84) Benannte Vertragsstaaten: **AT BE CH DE FR GB IT LI LU NL SE**

(71) Anmelder: **Vetter, Richard, Schmedenstedterstrasse 9-9A, D-3150 Peine (DE)**

(72) Erfinder: **Vetter, Richard, Schmedenstedterstrasse 9-9A, D-3150 Peine (DE)**

(74) Vertreter: **Depmeyer, Lothar, Auf der Höchte 30, D-3008 Garbsen 1 (DE)**

(54) **Gerät zum Erwärmen von Wasser, insb. Warmwasserheizkessel.**

(57) Die Erfindung geht aus von einem Gerät der obigen Art, bei dem eine Verbrennungskammer mit einem Wärmeaustauscher vorgesehen ist. Außerdem sind eine oder mehrere weitere Wärmeaustauscher in dem Gehäuse des Gerätes untergebracht. Um die Temperatur am Ausgang des Gerätes gering halten zu können, ist die Verbrennungskammer oben im Gerät angeordnet, während die am weitesten unten gelegene Kammer bzw. Wärmeaustauscher als Kondesationskammer ausgeführt ist. Infolge der obenliegenden Verbrennungskammer bleibt die untenliegende Kodensationskammer von der Wärmeeinwirkung stärker verschont. Unter weitgehender Wärmeausnutzung sind Abgastemperaturen und Wasserausgangstemperaturen am unteren Wärmeaustauscher von max. 30°C möglich. Damit eine weitgehende Schonung des Gerätes erreichbar ist, erhalten die oberhalb der Kondensationskammer befindliche Kammer(n) eine Einrichtung zum Einleiten von heissen Gasen, die ein Abfallen der Temperatur unter etwa 60°C vermeiden soll. Dies kann durch einen Thermostaten geschehen.

ACTORUM AG

Gerät zum Erwärmen von Wasser, insb.
Warmwasserheizkessel

Die Erfindung betrifft ein Gerät zum Erwärmen von Wasser,
insb. jedoch einen Warmwasserheizkessel, mit einer zum
Einleiten bzw. Erzeugen · heisser Gase dienenden
Kammer, insb. Verbrennungskammer, wobei dieser Kammer
ein Wärmeaustauscher zugeordnet ist und ein oder mehrere
weitere Wärmeaustauscher vorgesehen sind und wobei weiterhin die Wärmeaustauscher innerhalb des Gerätes übereinander angeordnet sind.

Bei bekannten Geräten dieser Art befindet sich die
Verbrennungskammer im unteren Teil des Gerätes; dies
hat den Vorteil, dass im Stillstand des Gerätes die
im Wärmeaustauscher der Verbrennungskammer gespeicherte
Wärme zu den anderen Wärmeaustauscher abfliessen kann.
Dies kann zu Wärmeverlusten führen; zudem ist eine
Kontrolle der übrigen Wärmeaustauscher schwierig.

Die Erfindung geht von der Erkenntnis aus, dass eine
weitgehende Nutzung der in das Gerät eingeleiteten Wärme
nur dann möglich ist, wenn die Temperatur der Gase
am Austritt des Gerätes möglichst gering ist, und zwar
in einem solchen Masse, dass in dem vor dem Austritt

- 2 -

befindlichen Wärmeaustauscher bereits eine Kondensation eintreten kann, um so durch entsprechende Ableiter für eine Neutralisation bzw. Entschwefelung Sorge tragen zu können.

Der Erfindung liegt demgemäss die Aufgabe zugrunde, die eingangs erwähnten Geräte so auszubilden, dass ein hoher Wärmewirkungsgrad erreichbar ist und noch im Gerät eine Kondensation entstehen kann.

Zur Lösung dieser Aufgabe ist erfindungsgemäss die zum Einleiten der Gase dienende bzw. die zum Erzeugen der heissen Gase dienende Kammer im Gerät oben angeordnet und zudem ist der am weitesten unten gelegene Wärmeaustauscher als Kondensationskammer ausgeführt.

Bei Anwendung der üblichen Isolationsmittel zur Vermeidung von Wärmeverlusten fängt sich gewissermassen die Wärme in dem oberen Teil des Gerätes; es wird vermieden, dass im Stillstand des Gerätes Wärme abfliesst, und zwar insb. dann, wenn der gewöhnlich zum Absaugen der Gase dienende Ventilator ausser Betrieb ist. Weiterhin kann aus diesen Gründen keine unerwünschte Erwärmung der unten gelegenen Wärmeaustauscher eintreten; und diese Tatsache ermöglicht es, den am Gasausgang des Gerätes befindlichen Wärmeaustauscher als Kondensator für die heissen Gase zu benutzen. Demgemäss werden auch die Gase, insb. die Rauchgase weitgehend ausgenutzt; sie können das Gerät dementsprechend mit einer Temperatur verlassen, die geringer ist als $30^{\circ}$ C.

Weitere Einzelheiten der Erfindung werden anhand der Zeichnung erläutert.

- 3 -

- 3 -

Es zeigen :

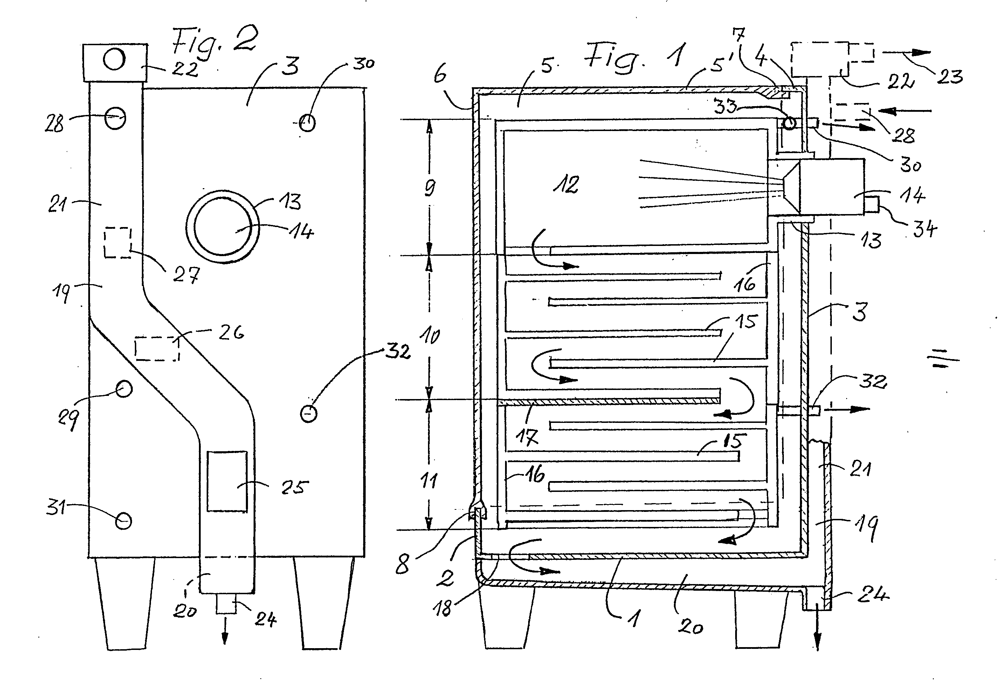

Fig. 1 einen Warmwasserheizkessel im senkrechten
     Mittelschnitt und

Fig. 2 die Stirnansicht des Kessels gemäss Fig. 1.

Das aus Kunststoffwandungen bestehende Gehäuse des
Kessels hat unten eine Schale 1 mit nach oben abgewinkelten
Rändern 2 und eine Stirnwand 3 mit nach hinten abgewinkelten Randteilen 4. Die Schale 1 und die Stirnwand 3 können
dabei einstükig ineinander übergehen. Der grösste Teil
der beiden Seitenwände 5 und der oben gelegenen Wandung 5'
sowie der Rückwand 6 werden dabei von einer einstückig
ausgeführten Haube gebildet, die mit ihren Rändern bei
7 und 8 praktisch luftdicht an den Rändern 2, 4 anliegt.

Innerhalb des Gerätes befinden sich drei Wärmeaustauscher
9, 1o, 11, von denen der im Gehäuse oben liegende die Verbrennungskammer 12 bildet, deren Wandungen alle als Hohlräume zum Durchleiten des Wassers ausgeführt sind.
Auch der stutzenartige Fortsatz 13 zur Aufnahme des
Brenners 14 ist wasserbeaufschlagt, also aktiver Bestandteil des Wärmeaustauschers 9. Wasserbeaufschlagt sind
auch die Umlenkwände 15 und die senkrechten Seitenwände 16
der beiden Wärmeaustauscher 1o, 11, von denen der Wärmeaustauscher 1o wirkungsmässig mit dem Wärmeaustauscher 9
zusammenarbeitet. Diese beiden Wärmeaustauscher 1o, 9
führen das Wasser höherer Temperatur, während der unten
liegende Wärmeaustauscher 11 durch eine Isolationsplatte 17
von dem Wärmeaustauscher 1o getrennt ist und somit
kälteres Wasser von etwa max. 3o$^{\text{o}}$ C führt sowie demgemäss
von Gasen beaufschlagt wird, deren Temperatur ebenfalls
max. etwa 3o$^{\text{o}}$ C beträgt.

- 4 -

Demgemäss tritt innerhalb des Wärmeaustauschers 11
eine Kondensation ein, wodurch eine wünschenswerte Entschwefelung vollzogen wird.

Am hinteren Ende der Schale 1 befindet sich eine Austrittsöffnung 18, von der aus die Abgase in den Abgaskanal 19 gelangen, der zunächst als ein mittig unterhalb
der Schale 1 befindlicher Kanal 2o und dann als ein vor
der Stirnwand 3 befindlicher Kanal 21 mit senkrechtem
Verlauf ausgeführt ist. Am oberen Ende dieses Kanals 21
befindet sich eine elektrische Saugzugeinrichtung 22, die
im Bereich der oberen Kante des Gehäuses befestigt ist.
Von dort aus verlassen die Abgase das Gerät in Richtung
des Pfeiles 23 zum Schornstein.

Der Kanal 2o ist zum vorderen Gehäuseteil hin mit Gefälle
verlegt; etwa unterhalb der vorderen, unteren Gehäusekante befindet sich ein Abfluss 24 für das Kondensat,
während sich darüber ein Schauglas 25, eine Einspritzvorrichtung 26 zum Einspritzen von Wasser in den Kanal 19
und weiterhin ein Gasstromwächter 27 zu Steuerzwecken
befindet. Nahe unterhalb der Saugzugeinrichtung ist noch
ein Zuluftstutzen 28 vorgesehen.

Die beiden Wärmeaustauscher 9, 1o haben einen gemeinsamen
Warmwassereintrittsstutzen 29 und einen Warmwasseraustrittsstutzen 3o. Der Eintrittsstutzen für den Wärmeaustauscher 11
ist mit 31 bezeichnet; der zugehörige Austritt trägt das
Bezugszeichen 32. Alle diese Stutzen sind durch die
Stirnwand 3 hindurchgeführt, um einen hermetischen Abschluss der hinteren Gehäusewandungen sicherzustellen
und eine Abnehmbarkeit der Wandungen 5, 6 als Ganzes, nicht
durchbrochenes Gebilde zu ermöglichen.

Die Tatsache, dass bei allen Wärmeaustauschern 9, 1o, 11 die Aussenwandungen wasserdurchflossen sind und zudem auch der Fortsatz 13 zur Anbringung des Gas- bzw. Ölbrenners so beschaffen ist, ermöglicht die Verwendung von Kunststoffen für das Gehäuse. Da dieses zudem praktisch luftdicht ausgeführt ist, steht aufgrund der Saugzugeinrichtung 22 auch der Gehäuseteil zwischen Gehäusewandung einerseits und den Wärmeaustauschern 9, 1o, 11 andererseits unter Unterdruck, um so bei einer guten Luftisolation auch für einen Abzug der Gase zu sorgen.

Es sei noch erwähnt, dass insb. die Isolationsplatte 17 und die Teile des Gerätes, die sich im unteren Bereich befinden, säurefest ausgeführt sein müssen, was bei entsprechender Wahl eines Kunststoffes ohne weiteres möglich ist.

Der Erfindung liegt weiterhin die Aufgabe zugrunde, die oben erwähnten Geräte so zu verbessern, dass deren guter Wirkungsgrad erhalten bleibt, darüber hinaus aber beim Betrieb des Gerätes eine weitgehende Schonung des Gerätes, also eine lange Lebensdauer erreicht werden kann.

Dieses wird erfindungsgemäss dadurch erreicht, dass dem Wärmeaustauscher für die Kammer eine zur Steuerung der Kammer dienende Einrichtung zugeordnet ist, die in die Kammer heisse Gase einleitet, wenn nach voraufgegangener Erwärmung die Temperatur auf etwa $60^o$ C abfällt. Zweckmässigerweise erhält aus diesem Grunde der Austritt des Wärmeaustauschers einen Thermostaten, der im Falle eines Gas- bzw. Ölbrenners, den Brenner einschaltet, diesen jedoch bei einer Temperatur von etwa $70^o$ C ( evtl. bis etwa $90^o$ C ) abschaltet.

Demgemäss wird ein wichtiges Ziel erreicht. Während bei vorbekannten Geräten die Temperaturen innerhalb der oberen Rauchgaskammer od. dgl. ständig $60^{\circ}$ C unterschreiten und überschreiten und so eine Kondensation eintritt, wird aufgrund der Erfindung der "trockene Zustand " stets beibehalten. Dieser Betriebszustand stellt indessen sicher, dass die erwähnte Kammer und die Wandungen für den Wärmeaustauscher eine wesentlich geringere Belastung erfahren.

Darüber hinaus wird jedoch in dem am weitesten unten liegenden Wärmeaustauscher bewusst eine Kammertemperatur eintreten, die eine Kondensation zur Folge hat. Am Austritt des zugehörigen Wärmeaustauschers sollte daher eine Temperatur von etwa $30^{\circ}$C herrschen, während für den Eintritt dieses Wärmeaustauschers eine Temperatur von weniger als $20^{\circ}$ C wünschenswert ist.

Wichtig ist nun, dass dem Austrittsstutzen 30 ein Thermostat 33 zugeordnet ist, der wirkungsmässig mit den Schaltorganen 34 des Brenners 14 verbunden ist. Smit kann der Thermostat 33 den Brenner 14 ein- und ausschalten.

Für die Lebensdauer und den Betrieb des Gerätes ist es von grosser Bedeutung, dass die von den Wärmeaustauschern 9, 10 umschlossenen Kammern trocken bleiben, dort also keine Kondensation stattfindet. Um dies sicherzustellen, übernimmt der Thermostat 33 eine Steuerungsfunktion. Nähert sich die Wassertemperatur am Austrittsstutzen 30 $60^{\circ}$ C, so wird durch den Thermostaten 33 der Brenner 14 eingeschaltet, damit eine Kondensationstemperatur im Bereich der Wärmeaustauscher 9, 10 ausbleibt. Wird auf diese Weise am Austrittsstutzen 30 eine Temperatur von etwa $70^{\circ}$ C erreicht, so schaltet der Thermostat 33 den Brenner 14 ab.

An den Stutzen 31, 32, also im Bereich des Wärmeaustauschers 11 sollen Temperaturen von bis zu $20^\circ$C ( am Eingang ) und von etwa $30^\circ$C ( am Ausgang ) eingehalten werden. Diese Temperaturen sichern eine Kondensation und einen Ablauf des Kondensats über den Abfluss 24. Erreicht wird daher eine wünschenswerte Entschwefelung.

Aufgrund der Erfindung wird also eine oben liegende Verbrennungskammer 12 mit zwei Wärmeaustauschern 9, 10 erreicht, deren zugehörige Kammern trocken gefahren werden, während eine darunter liegende Kammer als Kondensationskammer ausgebildet ist.

Ansprüche

1. Gerät zum Erwärmen von Wasser, insb. Warmwasserheizkessel, mit einer zum Einleiten bzw. Erzeugen heisser Gase dienenden Kammer, insb. Verbrennungskammer, wobei diese Kammer als Wärmeaustauscher ausgebildet ist und ein oder mehrere weitere Wärmeaustauscher vorgesehen sind und wobei weiterhin alle Wärmeaustauscher übereinander innerhalb des Gehäuses für das Gerät angeordnet sind, dadurch gekennzeichnet, dass die zum Einleiten bzw. Erzeugen der Gase dienende Kammer (9) im Gerät oben angeordnet ist und die am weitesten unten gelegene Kammer (11) als Kondensationskammer ausgeführt ist.

2. Gerät nach Anspruch 1, dadurch gekennzeichnet, dass die unten gelegene Kammer (11) gegenüber der bzw. den darüber befindlichen Kammern (9,1o) wärmeisoliert ist ( Platte 17 ).

3. Gerät nach Anspruch 1, dadurch gekennzeichnet, dass der untere Teil des Gehäuses schalenförmig ausgebildet ist und zum Sammeln des Kondensats dient.

4. Gerät nach Anspruch 3, dadurch gekennzeichnet, dass von dem unteren Teil des Gehäuses aus ein Kanal (2o) zum Ableiten des Kondensats und der Abgase abzweigt.

5. Gerät nach Anspruch 4, dadurch gekennzeichnet, dass der Kanal (2o) etwa im Bereich der vorderen Stirnfläche des Gerätes einen Kondensatabfluss (24) aufweist, von dem aus sich ein Gasabzug (21) vor der Stirnfläche des Gerätes nach oben erstreckt, der mit einem Schauglas (25),einer Wassereinspritzeinrichtung (26), einem Gasstromwächter (27) zum Steuern des Gerätes, einer Frischluftzufuhr (28) und am oberen/etwa im Bereich der Gehäuseoberkante mit einer Saugzugeinrichtung (22) ausgestattet sein/ kann/ wobei diese dem Gasabzug zugeordneten Mittel einzeln oder in Kombination miteiner vorgesehen sein können.

6. Gerät nach Anspruch 1, dadurch gekennzeichnet, dass der zum Einleiten der heissen Gase dienende bzw. zur Anbringung des Brenners (14) dienende Rohrstutzen zum Anschluss an die im Gerät oben liegende Kammer (9) wasserführend doppelwandig ausgeführt ist.

7. Gerät nach Anspruch 1, dadurch gekennzeichnet, dass dem Wärmeaustauscher (9) für die zum Erzeugen bzw. Einleiten heisser Gase dienende Kammer (12) und den ggfs. weiterhin noch vorhandenen, oberhalb der Kondensationskammer befindlichen Kammern eine zur Steuerung dieser Kammern dienende Einrichtung zugeordnet ist, die in diese Kammern heisse Gase einleitet, wenn nach vorausgegangener Erwärmung die Temperatur auf etwa $60^{\circ}$ C abfällt.

8. Gerät nach Anspruch 7, dadurch gekennzeichnet, dass die Einrichtung die heissen Gase abschaltet, wenn die Temperatur auf etwa $70^{\circ}$ C angestiegen ist.

9. Gerät nach Anspruch 7, dadurch gekennzeichnet, dass die Einrichtung ein Thermostat (33) ist, der den Brenner (14) der Verbrennungskammer (12) ein- bzw. ausschaltet.

1o. Gerät nach Anspruch 1, dadurch gekennzeichnet, dass der der Kondensationskammer zugeordnete Wärmeaustauscher (11) am Eingang eine Temperatur von etwa $2o^{o}$ C und weniger hat, während die Ausgangstemperatur etwa $3o^{o}$ C beträgt.

Fig. 1

Fig. 2